# FASCICULE DE BREVET EUROPEEN

(11) **EP 3 983 243 B1**
(45) Date de publication et mention de la délivrance du brevet: **24.05.2023**
(21) Numéro de dépôt: 20743741.9
(22) Date de dépôt: 11.06.2020
(51) Int. Cl.: B60C 13/00, B29D 30/72

(54) **PROCEDE DE DEPOT DE COUCHE COLOREE SUR UN PNEUMATIQUE**
VERFAHREN ZUR ABSCHEIDUNG EINER FARBIGEN SCHICHT AUF EINEN REIFEN
METHOD FOR DEPOSITING A COLOURED LAYER ON A TYRE

(30) Priorité: 13.06.2019 FR 1906277
(43) Date de publication de la demande: 20.04.2022
(73) Titulaire: COMPAGNIE GENERALE DES ETABLISSEMENTS MICHELIN, 63040 Clermont-Ferrand (FR)
(72) Inventeur: JAQUET, Hélène, 63040 CLERMONT-FERRAND CEDEX 9 (FR); DJABOUR, Walid, 63040 CLERMONT-FERRAND CEDEX 9 (FR)
(74) Mandataire: Roussy, Delphine
(86) Numéro de dépôt international: PCT/FR2020/050991
(87) Numéro de publication internationale: WO 2020/249902

(56) Documents cités:
- EP-A2- 2 522 496
- DE-A1-102017 207 921

## Description

L'invention concerne un procédé pour déposer au moins une couche colorée sur la surface d'un pneumatique, et un pneumatique obtenu selon ce procédé.

Un pneumatique est une structure torique dont l'axe de révolution est l'axe de rotation du pneumatique, comprenant une bande de roulement destinée à entrer en contact avec le sol, deux flancs et deux bourrelets destinés à entrer en contact avec une jante, les deux bourrelets étant reliés à la bande de roulement par les deux flancs.

Dans la demande CN103740171A, il est connu de déposer une peinture sur un pneumatique puis de la vulcaniser par ultraviolet. Malheureusement un tel procédé nécessite l'utilisation de peinture comprenant des solvants volatiles.

Il est encore connu du document EP2,522,496 A1 un procédé pour appliquer une bande de caoutchouc colorée sur la surface du flanc du pneumatique, puis de cuire l'ensemble pour obtenir des protubérances au niveau de la bande de caoutchouc recouverte. Mais un tel procédé nécessite d'utiliser un pneu non vulcanisé, et présente l'inconvénient de comprendre un nombre important d'étapes de fabrication différentes. Ensuite, le document DE102017207921 A1 décrit un procédé pour appliquer plusieurs couches en caoutchouc coloré, puis d'enlever du matériau par ablation par laser pour créer un motif multicolore.

Aussi il subsiste le besoin de disposer d'un procédé qui permette d'obtenir un pneumatique permettant de l'identifier et de le repérer visuellement aussi bien dans le but d'harmoniser le pneumatique à la couleur de la carrosserie du véhicule que pour faciliter le repérage d'une flotte de véhicules équipés de tels pneumatiques.

L'invention a donc pour objet un procédé pour traiter la surface d'un flanc de pneumatique vulcanisé. Ce procédé se caractérise en ce qu'il consiste à appliquer une couche colorée sur la totalité dudit flanc, ou sur au moins une partie du flanc dudit pneumatique par jet d'encre, puis, après séchage, à enlever de manière sélective la couche colorée de manière à créer un premier motif.

Le procédé selon l'invention présente l'avantage d'être de réalisation simple notamment par un faible nombre d'étapes et de permettre une application très fine et régulière de la couche colorée. Un autre avantage de ce procédé est de permettre la réalisation de différents contrastes sur les flancs, permettant d'élargir ainsi les possibilités d'application de ce type de revêtement. Enfin un dernier avantage du procédé est d'appliquer une couche colorée pouvant avoir une couleur identique ou différente de celle de la carrosserie du véhicule.

Un autre objet de l'invention est un pneumatique obtenu selon le procédé tel que décrit précédemment.

De préférence, la couche colorée comprend au moins une couleur.

De préférence, la couche colorée est retirée selon une profondeur comprise entre 100% et 150% de l'épaisseur de ladite couche colorée sur au moins une partie dudit flanc.

De préférence, le retrait de la couche colorée est effectué au choix par voie chimique et/ou par abrasion mécanique et/ou par laser.

De préférence, on crée un second motif faisant contraste par rapport audit premier motif dudit flanc, ledit second motif comprenant une structure pouvant piéger la lumière ou des micro orifices ou des micro stries.

De préférence, ledit second motif sous forme de micro orifices comprend une pluralité d'ouvertures et de zones intermédiaires séparant ces ouvertures, les ouvertures occupant au moins 60% du motif, ces ouvertures étant réparties dans ledit second motif selon une densité au moins égale à cinq ouvertures par mm², ces ouvertures présentant des diamètres équivalents compris entre 0,03mm et 0,5mm.

De préférence, ledit second motif sous forme de micro stries comprend une pluralité de lames sensiblement parallèles entre elles et disposées selon un pas d'au plus 0,5mm, chaque lame ayant une largeur moyenne comprise entre 0,03mm et 0,05mm.

De préférence, les micro orifices et les micro stries ont chacun des parois dont au moins un quart de leur surface comprend une rugosité moyenne comprise entre 5µm et 30µm.

De préférence, le second motif est obtenu au choix par laser et/ou par usinage et/ou par voie chimique.

De préférence, le second motif est disposé dans ledit premier motif ou à proximité dudit premier motif

L'invention va être décrite à l'aide des figures suivantes, schématiques et non nécessairement à l'échelle, et dans lesquelles:
- La figure 1 représente une vue schématique partielle d'un pneumatique selon l'état de la technique,
- Les figures 2A et 2B représentent une vue schématique partielle d'un pneumatique obtenu selon l'invention,
- La figure 3 représente une vue schématique partielle d'un pneumatique obtenu selon une première variante de l'invention,
- La figure 4 représente une vue schématique partielle d'un pneumatique obtenu selon une seconde variante de l'invention,
- La figure 5 représente une vue schématique partielle d'un pneumatique obtenu selon une troisième variante de l'invention,
- Les figures 6A et 6B représentent une vue schématique partielle d'un pneumatique obtenu selon une quatrième variante de l'invention.

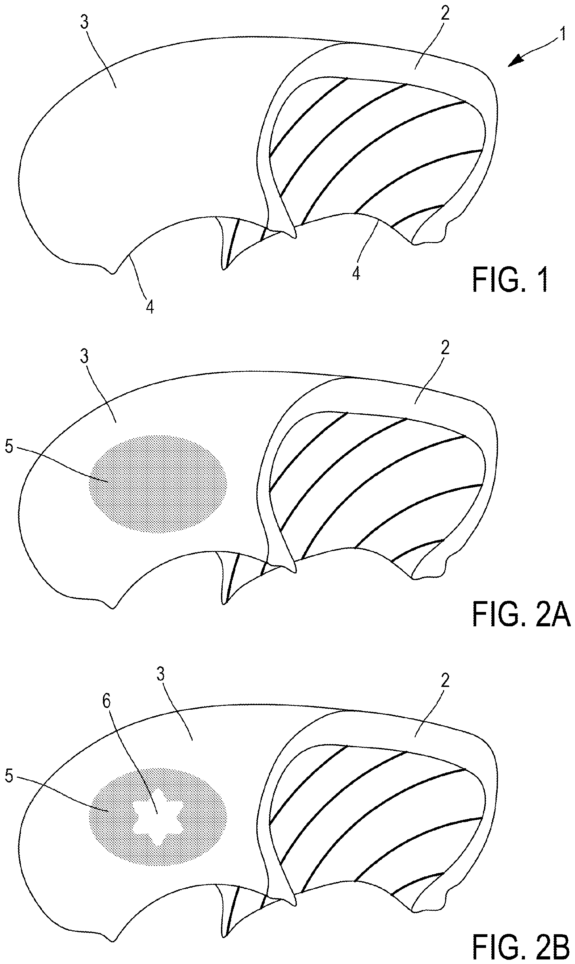

Sur la figure 1, on peut voir un pneumatique (représentation partielle) de référence générale 1 comprenant une bande de roulement 2 destinée à entrer en contact avec le sol, deux flancs 3 et deux bourrelets 4 destinés à entrer en contact avec une jante, les deux bourrelets 4 étant reliés à la bande de roulement 2 par les deux flancs 3.

La figure 2A montre un pneumatique selon l'invention dont une partie du flanc 3 a reçu l'application d'une couche colorée 5. Préalablement à l'application de la couche colorée, le flanc 3 du pneumatique est nettoyé et dégraissé, puis chauffé à environ 90° à l'aide d'une lampe infra-rouge. La couche colorée 5 est une encre à base aqueuse, et est appliquée à l'aide d'une machine rotative comprenant des buses de jet d'encre. Pendant que le pneumatique est mis en rotation, les buses se déplacent en translation pendant l'impression. Juste après l'application de l'encre sur le flanc 3 du pneumatique, l'encre est séchée par une lampe infra-rouge. Le pneumatique est ensuite refroidi, puis un rayon laser d'une puissance comprise entre 15 et 20W est appliqué sur cette surface recouverte pour retirer de manière prédéfinie de l'encre pour créer un premier motif 6 comme le montre la figure 2B. L'encre est modifiée sur une profondeur d'environ 120% sur toute la surface du flanc 3 comprenant de l'encre.

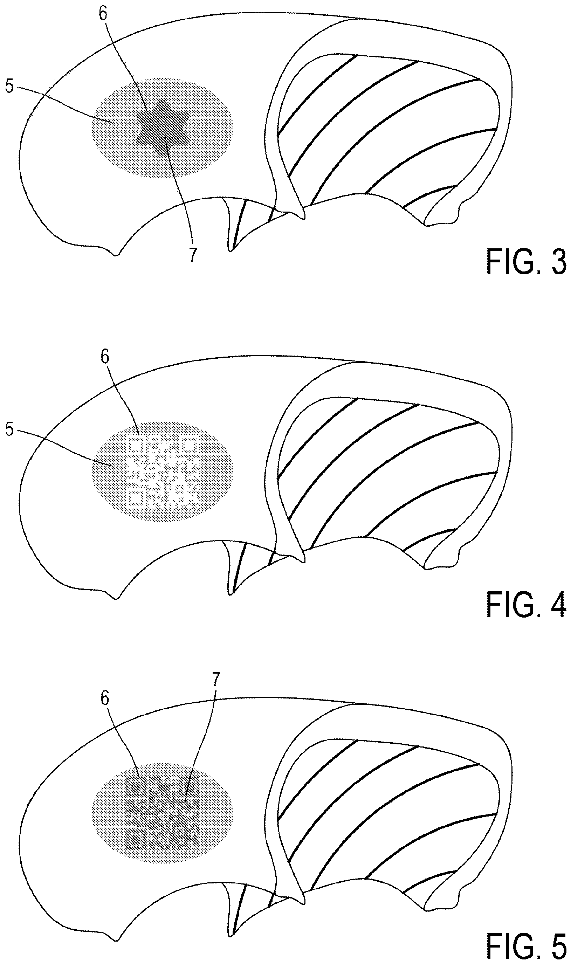

La figure 3 montre un premier motif 6 comprenant un second motif 7. Ce second motif 7 comprend une pluralité de lames sensiblement parallèles entre elles et disposées selon un pas d'au plus 0,5mm, chaque lame ayant une largeur moyenne d'environ 0,04mm. Ce motif 7 donne une impression semblable à celle du velours.

Comme le montre la figure 4, le premier motif 6 peut revêtir la forme d'un QR Code permettant le stockage d'informations. Il est obtenu par le retrait bien défini de la couche colorée. La figure 5 montre le dessin d'un QR Code de la figure 4 sur lequel est ajouté un second motif 7 constitué de micro stries selon une densité égale à 6 ouvertures par mm² ; les ouvertures présentant des diamètres équivalents égales à 0,04mm donnant cette impression de velours.

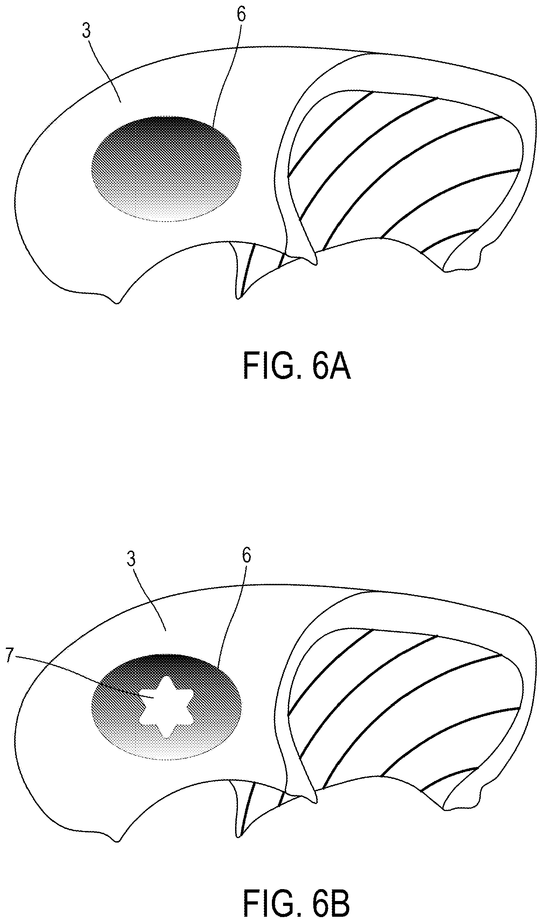

Les figures 6A et 6B montrent chacune une variante du premier motif obtenu selon l'invention qui comprend un premier 6 et un second motif 7, tous deux multicouleurs, comprenant différentes couleurs d'encre pouvant représenter un dégradé de couleurs.

## Revendications

1. Procédé pour traiter la surface d'un flanc de pneumatique (3) vulcanisé, **caractérisé en ce qu'**il consiste à :
- appliquer une couche colorée (5) sur la totalité dudit flanc (3) ou sur au moins une partie du flanc (3) dudit pneumatique par jet d'encre, puis, après séchage, à
- enlever de manière sélective la couche colorée (5) de manière à créer un premier motif (6).

2. Procédé selon la revendication 1 dans lequel la couche colorée (5) comprend au moins une couleur.

3. Procédé selon l'une des revendications précédentes, dans lequel la couche colorée (5) est retirée selon une profondeur comprise entre 100% et 150% de l'épaisseur de ladite couche colorée sur au moins une partie dudit flanc (3).

4. Procédé selon la revendication 3, dans lequel le retrait de la couche colorée (5) est effectué au choix par voie chimique et/ou par abrasion mécanique et/ou par laser.

5. Procédé selon l'une des revendications précédentes, dans lequel on crée un second motif (7) faisant contraste par rapport audit premier motif (6) dudit flanc, ledit second motif (7) comprenant une structure pouvant piéger la lumière ou des micro orifices ou des micro stries.

6. Procédé selon la revendication 5, dans lequel ledit second motif (7) sous forme de micro orifices comprend une pluralité d'ouvertures et de zones intermédiaires séparant ces ouvertures, les ouvertures occupant au moins 60% du motif, ces ouvertures étant réparties dans ledit second motif (7) selon une densité au moins égale à cinq ouvertures par mm², ces ouvertures présentant des diamètres équivalents compris entre 0,03mm et 0,5mm.

7. Procédé selon la revendication 5, dans lequel ledit second motif (7) sous forme de micro stries comprend une pluralité de lames sensiblement parallèles entre elles et disposées selon un pas d'au plus 0,5mm, chaque lame ayant une largeur moyenne comprise entre 0,03mm et 0,05mm.

8. Procédé selon l'une quelconque des revendications 5 à 7, dans lequel le second motif (7) est obtenu au choix par laser et/ou par usinage et/ou par voie chimique.

9. Procédé selon l'une quelconque des revendications 5 à 7, dans lequel le second motif (7) est disposé dans ledit premier motif (6) ou à proximité dudit premier motif (6).

10. Pneumatique **caractérisé en ce qu'**il est obtenu selon l'une des revendications précédentes.

## Patentansprüche

1. Verfahren zur Behandlung der Oberfläche einer Flanke eines vulkanisierten Reifens (3), **dadurch gekennzeichnet, dass** es aus Folgendem besteht:
- Aufbringen einer farbigen Schicht (5) auf die gesamte Flanke (3) oder auf mindestens einen Teil der Flanke (3) des Reifens mittels Tintenstrahl, und dann, nach dem Trocknen,
- selektives Abtragen der farbigen Schicht (5), um ein erstes Muster (6) zu erzeugen.

2. Verfahren nach Anspruch 1, wobei die farbige Schicht (5) mindestens eine Farbe beinhaltet.

3. Verfahren nach einem der vorhergehenden Ansprüche, wobei die farbige Schicht (5) über mindestens einen Teil der Flanke (3) gemäß einer Tiefe zwischen 100 ö und 150 ö der Dicke der farbigen Schicht entfernt wird.

4. Verfahren nach Anspruch 3, wobei die Entfernung der farbigen Schicht (5) wahlweise auf chemischem Wege und/oder durch mechanische Abrasion und/oder durch Laser erfolgt.

5. Verfahren nach einem der vorhergehenden Ansprüche, wobei ein zweites Muster (7) erzeugt wird, das mit dem ersten Muster (6) der Flanke kontrastiert, wobei das zweite Muster (7) eine Struktur, die das Licht einfangen kann, oder Mikrolöcher oder Mikrorillen beinhaltet.

6. Verfahren nach Anspruch 5, wobei das zweite Muster (7) in Form von Mikrolöchern eine Vielzahl von Öffnungen und Zwischenbereichen, die diese Öffnungen trennen, beinhaltet, wobei die Öffnungen mindestens 60 ö des Musters einnehmen, wobei diese Öffnungen gemäß einer Dichte von mindestens fünf Öffnungen pro mm² in dem zweiten Muster (7) verteilt sind, wobei diese Öffnungen äquivalente Durchmesser zwischen 0,03 mm und 0,5 mm aufweisen.

7. Verfahren nach Anspruch 5, wobei das zweite Muster (7) in Form von Mikrorillen eine Vielzahl von Streifen beinhaltet, die untereinander im Wesentlichen parallel sind und in einem Abstand von höchstens 0,5 mm angeordnet sind, wobei jeder Streifen eine mittlere Breite zwischen 0,03 mm und 0,05 mm aufweist.

8. Verfahren nach einem beliebigen der Ansprüche 5 bis 7, wobei das zweite Muster (7) wahlweise durch Laser und/oder durch Bearbeitung und/oder auf chemischem Wege erhalten wird.

9. Verfahren nach einem beliebigen der Ansprüche 5 bis 7, wobei das zweite Muster (7) in dem ersten Muster (6) oder in der Nähe des ersten Musters (6) angeordnet ist.

10. Reifen, **dadurch gekennzeichnet, dass** er gemäß einem der vorhergehenden Ansprüche erhalten wird.

## Claims

1. A method for treating the surface of a vulcanized tyre sidewall (3), **characterized in that** it consists in:
- applying by inkjet a coloured layer (5) to the whole of said sidewall (3) or to at least a part of the sidewall (3) of said tyre and then, after drying,
- selectively removing the coloured layer (5) in such a manner as to create a first pattern (6).

2. Method according to Claim 1 in which the coloured layer (5) comprises at least one colour.

3. Method according to either one of the preceding claims, in which the coloured layer (5) is removed to a depth between 100% and 150% inclusive of the thickness of said coloured layer over at least a part of said sidewall (3).

4. Method according to Claim 3, in which the coloured layer (5) is removed by chemical means and/or by mechanical abrasion and/or by laser.

5. Method according to any one of the preceding claims, in which a second pattern (7) is created contrasting with said first pattern (6) on said sidewall, said second pattern (7) comprising a structure able to trap light or micro-orifices or micro-striations.

6. Method according to Claim 5, in which said second pattern (7) in micro-orifice form comprises a plurality of openings and intermediate zones separating those openings, the openings occupying at least 60% of the pattern, those openings being distributed in said second pattern (7) in accordance with a density at least equal to five openings per mm², those openings having equivalent diameters between 0.03 mm and 0.5 mm inclusive.

7. Method according to Claim 5, in which said second pattern (7) in micro-striation form comprises a plurality of substantially parallel blades disposed at a pitch of at most 0.5 mm, each blade having an average width between 0.03 mm and 0.05 mm inclusive.

8. Method according to any one of Claims 5 to 7, in which the second pattern (7) is obtained by laser and/or by machining and/or by chemical means.

9. Method according to any one of Claims 5 to 7, in which the second pattern (7) is disposed in said first pattern (6) or in the vicinity of said first pattern (6).

10. Tyre **characterized in that** it is obtained in accordance with any one of the preceding claims.
